# EUROPEAN PATENT SPECIFICATION

(11) **EP 2 581 961 B1**
(45) Date of publication and mention of the grant of the patent: **05.09.2018**
(21) Application number: 12176772.7
(22) Date of filing: 17.07.2012
(51) Int. Cl.: H01M 2/04

(54) **Secondary battery**
Sekundärbatterie
Batterie secondaire

(30) Priority: 12.10.2011 US 201161546279 P; 18.05.2012 US 201213475797
(43) Date of publication of application: 17.04.2013
(73) Proprietor: Samsung SDI Co., Ltd., Gyeonggi-do (KR)
(72) Inventor: YONG, Jun-Sun, Chungcheonbuk-do (KR); KIM, Andrew, Chungcheongbuk-do (KR); LEE, Sang-Jin, Gyeonggi-do (KR); HAN, Moon-Hong, Gyeonggi-do (KR); PARK, Sang-Jin, Gyeonggi-do (KR)
(74) Representative: Santarelli

(56) References cited:
- EP-A1- 2 164 121
- US-A1- 2010 178 535

## Description

The present invention relates to a secondary battery.

### Background of the invention

Technologies for mobile devices, such as mobile phones, notebook computers, tablet computers or the like have been constantly developed and the production of such devices has continually increased. As a consequence, demand for secondary batteries as an energy source has increased significantly. For safety reasons, a secondary battery often includes a safety device for performing a protection operation, such as detecting a malfunction, for example, over-heating or flow of excess current, or blocking a current flow.

### Summary of the Invention

According to the invention there is provided a secondary battery as defined in claim 1.

According to a first aspect of the invention there is provided a secondary battery comprising: an electrode assembly; a case housing the electrode assembly; a cap plate arranged to cover an opening of the case; a safety device disposed on the cap plate; a stiffener arranged to hold the safety device against the cap plate; and an electrode terminal electrically connected to the electrode assembly and arranged to fix the safety device and the stiffener to the cap plate. The stiffener is provided with a through-hole through which the electrode terminal extends to fix the stiffener to the cap plate.
In an embodiment, the stiffener comprises thermally conductive material, for example invar or carbon steel.

In an embodiment, the secondary battery includes a heat transmission member interposed between and in thermal contact with the safety device and the cap plate. The heat transmission member may comprise a flexible and thermally conductive material, for example silicone.

The safety device comprises a body portion and a first lead extending from the body portion and wherein the first lead of the safety device is provided with a through-hole in correspondence with the through hole of the stiffener.

The electrode terminal is provided with a first flange to fix the first lead and the stiffener to the cap plate by pressure.

The stiffener is arranged to apply a compression force to press the body portion of the safety device against the cap plate.

In an embodiment, the stiffener extends parallel to the first lead to overlie at least part of the first lead.

In an embodiment, the stiffener has a cantilever beam structure including a fixed end located at a first location corresponding to the first lead and a free end located at a second position corresponding to the body portion of the safety device.

In an embodiment, the secondary battery includes an electrode tap extending from the electrode assembly wherein the electrode terminal is directly connected to the electrode tap.

In an embodiment, the electrode terminal is provided with a second flange for connection to the electrode tap, the second flange being wider than the first flange.

An embodiment of the present invention includes a secondary battery that includes a safety device having a simplified installation structure.

Another embodiment of the present invention includes an installation structure of a safety device that enables precise detection of an inner temperature of a secondary battery.

A secondary battery according to an embodiment of the present invention includes: a cap plate that seals a case housing an electrode assembly; a safety device disposed on the cap plate; a stiffener that compresses the safety device against the cap plate; and an electrode terminal that passes through a first lead of the safety device and the stiffener together to fix the first lead and the stiffener on the cap plate.

In an embodiment, the electrode terminal fixes the first lead and the stiffener by compression on a first position, and the first lead and the stiffener extend from the first position toward a second position.

In an embodiment, the stiffener extends parallel to the first lead and covers the first lead.

In an embodiment, a safety device body is disposed on the second position, the first lead is connected to the safety device body, and the stiffener compresses the safety device body against the cap plate.

In an embodiment, the safety device body may be fixed between the cap plate and the stiffener by compression.

In an embodiment, a heat transmission member may be interposed between the safety device body and the cap plate.

In an embodiment, the heat transmission member may include a heat transmission silicone.

In an embodiment, the first position may be eccentric with respect to a central position of the cap plate.

In an embodiment, the stiffener may include a thermally conductive material.

In an embodiment, the stiffener may include an invar or carbon-steel.

In an embodiment, the electrode terminal is assembled passing through the cap plate, and an upper end of the electrode terminal which protrudes from the cap plate forms an upper flange that fixes the first lead and the stiffener by compression.

In an embodiment, a lower end of the electrode terminal forms a lower flange that forms a surface contact with the electrode assembly.

In an embodiment, an area of the lower flange is wider than an area of the upper flange.

In an embodiment, the cap plate may be an insert molded product in which a conductive member conforms to and is integrally formed with a first insulating portion for supporting the first lead.

In an embodiment, the electrode terminal may fix the first lead and the stiffener on the first insulating portion by compression by passing through the first lead, the stiffener, and the first insulating portion together.

In an embodiment, the first insulating portion extends in a passing direction of the electrode terminal, upper and lower ends of the electrode terminal arranged along the passing direction of the electrode terminal extend in a surface direction of the cap plate.

According to embodiments of the present invention, a safety device is fixed by compression after insertion of an electrode terminal, and thus welding between the safety device and the electrode terminal may not be needed. Also, the safety device is integrally formed with a cap plate. Thus, a secondary battery can be assembled via a simple operation.

Moreover, due to the use of a stiffener that enables the safety device to be pressed against the cap plate by compression, the safety device can more precisely detect an inner temperature of a secondary battery, and thus, when an abnormal operation occurs, the safety device may readily perform a safety operation. Since the stiffener is fixed together with the safety device by compression, the coupling strength and mechanical strength of the safety device may be reinforced and the safety device may be effectively protected.

Moreover, due to the configuration of a heat transmission member between the safety device and the cap plate, the safety device may precisely detect an inner temperature of a secondary battery.

### Brief Description of the Drawings

FIG. 1 is an exploded perspective view of a secondary battery according to an embodiment of the present invention.
FIG. 2 is an enlarged exploded perspective view of a portion of the secondary battery of FIG. 1.
FIGS. 3 to 5 are cross-sectional views taken a line III-III of FIG. 2.
FIG. 6 is a cross-sectional view of a portion of a cap plate according to an embodiment of the invention.

### Detailed Description

Hereinafter, exemplary embodiments of the present invention will be described in detail with reference to drawings attached to the present specification.

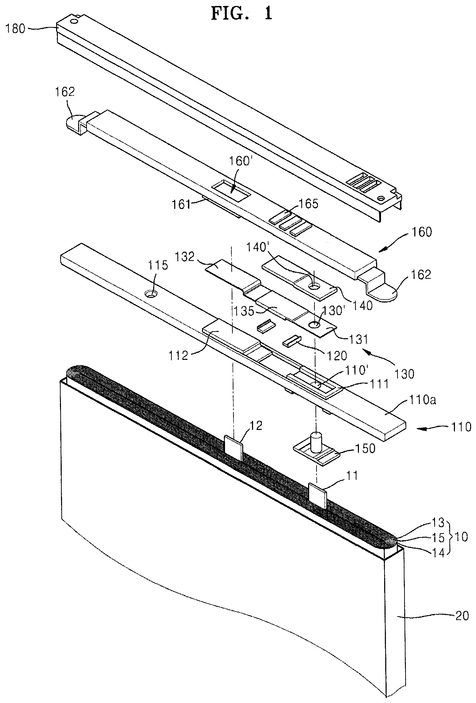

FIG. 1 is an exploded perspective view of a secondary battery according to an embodiment of the present invention. Referring to FIG. 1, the secondary battery includes a case 20 that houses an electrode assembly 10, a cap plate 110 that closes an open end of the case 20, and a safety device 130 that is mounted on the cap plate 110 and performs a safety operation in response to an abnormal operation, such as over-heating or flow of excess current.

The electrode assembly 10 may be formed by interposing a separator 15 between a negative electrode plate 13 and a positive electrode plate 14 to separate the negative electrode plate 13 from the positive electrode plate 14, and then winding the negative electrode plate 13, the positive electrode plate 14, and the separator 15 in a jelly-roll shape. The negative electrode plate 13 and the positive electrode plate 14 each include an electrode active material. The negative electrode plate 13 and the positive electrode plate 14 may respectively include first and second electrode taps 11 and 12 that allow electrical charges, formed due to a chemical reaction, to flow out of the electrode assembly 10. For example, the first and second electrode taps 11 and 12 respectively function as a negative electrode tap and a positive electrode tap.

The electrode assembly 10 may be immersed in an electrolyte (not shown) inside the case 20. An opening of the case 20 may be shielded by the cap plate 110 after the electrode assembly 10 is placed therein. Contact portions of the cap plate 110 and the case 20 may be firmly coupled to each other by laser welding, for example.

In one embodiment, the first electrode tap 11 of the electrode assembly 10 contacts an electrode terminal 150 that protrudes through the cap plate 110, and the second electrode tap 12 of the electrode assembly 10 contacts the cap plate 110. The electrode terminal 150 is coupled to the cap plate 110 while being insulated from the cap plate 110, and protrudes through the cap plate 110 to electrically connect the electrode assembly 10 to the safety device 130.

The safety device 130 is disposed on the cap plate 110 and may regulate or block charge and discharge currents during malfunctioning, for example, during occurrence of overheat or excess current. The safety device 130 may have a positive temperature coefficient (PTC) and may include a fuse, a current block device, a bi-metal, or the like. The safety device 130 in this embodiment includes a safety device body 135 and first and second leads 131 and 132 extending in opposite directions from the safety device body 135.

The cap plate 110 may have a safety vent 115 of a rupturable type so that when an inner pressure of the case 20 exceeds a set point, a gas discharge path is provided.

In the embodiment the circuit portion 160 is mounted on the cap plate 110. The circuit portion 160 may include an interconnection pattern (not shown) that enables electric connection with an external device (not shown) and forms a charge and discharge current path. On a surface of the circuit portion 160, an outer connection terminal 165 for electrical connection with an external device is formed, and first and second connection members 161 and 162 are disposed on the other surface. For example, the first connection member 161 may contact the second lead 132 of the safety device 130, which is a negative electrode terminal. For example, by using a welding electrode (not shown) entered through an opening 160' of the circuit portion 160, the first connection member 161 may be coupled to the second lead 132 by welding. The second connection member 162 contacts the cap plate 110 as a positive electrode terminal.

Moreover, the circuit portion 160 may function as a protection member for preventing the occurrence of an overcharge, excess current, over-discharge, or the like, together with the safety device 130. An upper cover 180 for housing the circuit portion 160 may be disposed on the cap plate 110.

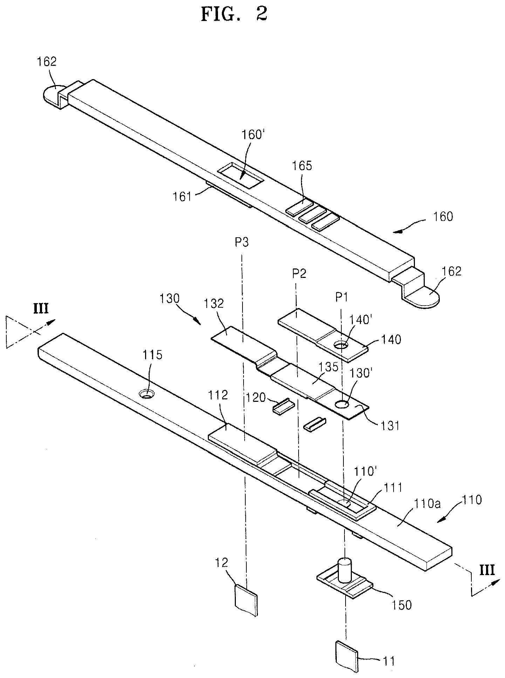

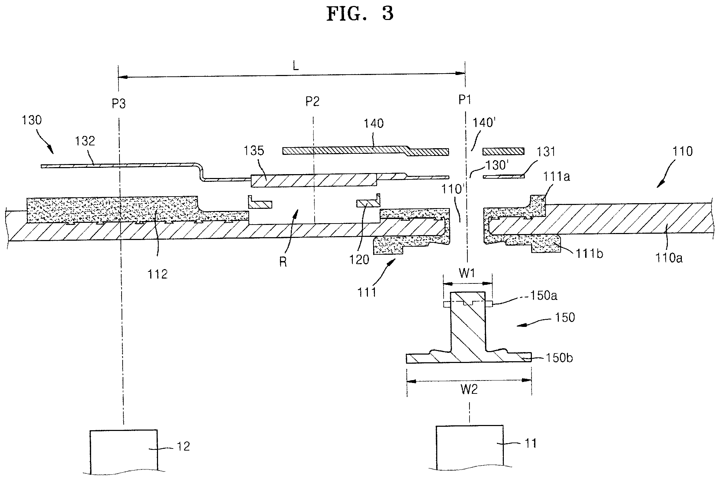

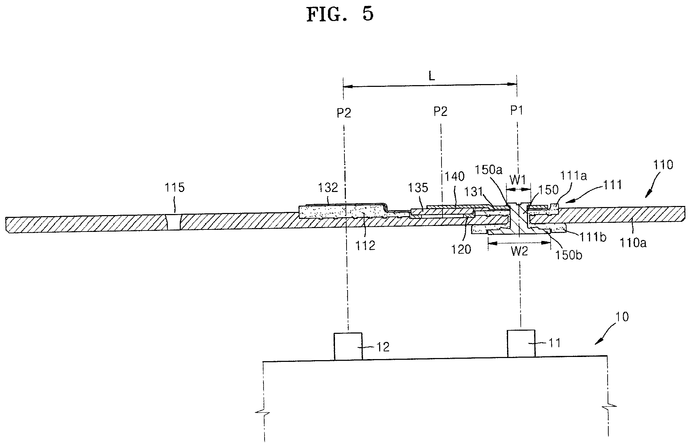

FIG. 2 is an enlarged exploded perspective view of a portion of the secondary battery of FIG. 1. FIGS. 3 to 5 are cross-sectional views taken a line III-III of FIG. 2.

Referring to FIG. 2, the electrode terminal 150 is assembled on a first position P1 of the cap plate 110. The electrode terminal 150 is assembled passing through the cap plate 110 by insertion, and electrically connects the electrode assembly 10 and the safety device 130 which are disposed on opposite sides of the cap plate 110.

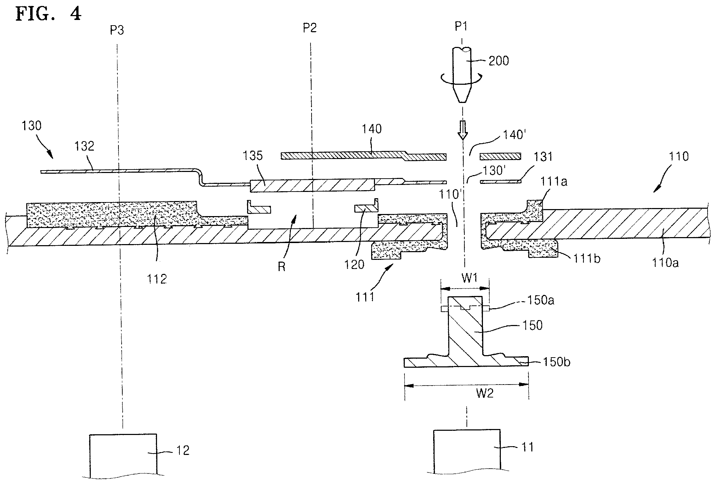

The electrode terminal 150 is inserted into a through-hole 110' of the first insulating portion 111, and for example, as illustrated in FIG. 4, the electrode terminal 150 may be inserted from a lower surface of the first insulating portion 111 and an upper portion of the electrode terminal 150 which protrudes from an upper surface of the first insulating portion 111 may be processed by caulking, spinning, or rivetting to form an upper flange 150a that is widened toward a circumference of the electrode terminal 150. The upper flange 150a fixes the electrode terminal 150 to the cap plate 110 by compression. A reference numeral 200 illustrated FIG. 4 denotes a process tool which is applied to an upper end of the electrode terminal 150.

The first lead 131 of the safety device 130 in this embodiment has a through-hole 130' and the electrode terminal 150 is inserted into the through-hole 130' of the first lead 131. The first lead 131 may be fixed by the electrode terminal 150 by compression. That is, the electrode terminal 150 fixes the first lead 131 on the cap plate 110 by compression and forms an electric contact with the first lead 131. For example, the electrode terminal 150 may be inserted into the through-hole 130' of the first lead 131 and the first lead 131 may be fixed on the cap plate 110 by the upper flange 150a of the electrode terminal 150. In this case, welding between the electrode terminal 150 and the safety device 130 may not be needed. Also, the first lead 131 of the safety device 130 extends from the first position P1 toward a second position P2 and is connected to the safety device body 135 disposed on the second position P2.

The electrode terminal 150 fixes a stiffener 140 together with the first lead 131. The stiffener 140 has a through-hole 140' corresponding to the electrode terminal 150. For example, the electrode terminal 150 is sequentially inserted into the first lead 131 and the stiffener 140 and then, an upper portion of the electrode terminal 150 is processed by, for example, caulking to form the upper flange 150a having a rivet shape. Thus, the first lead 131 and the stiffener 140 into which the electrode terminal 150 is inserted may be fixed on the cap plate 110 by compression.

The stiffener 140 extends in parallel to the first lead 131 of the safety device 130, and extends from the first position P1 where the electrode terminal 150 is located toward the second position P2 where the safety device body 135 is located. In the second position P2, the stiffener 140 compresses the safety device body 135 so that the safety device body 135 is pressed against the cap plate 110.

Because the safety device body 135 and the cap plate 110 are held against each other due to the compression applied by the stiffener 140, an inner temperature of the secondary battery may be more precisely detectable and an abnormal operation can be accurately detected to perform a safety operation, such as current breaking. At the second position P2, the safety device body 135 is firmly position-fixed between the stiffener 140 and the cap plate 110.

The stiffener 140 reinforces a coupling strength of the first lead 131 by being pressed by the electrode terminal 150 together with the first lead 131 while overlapping with the first lead 131. Due to the use of the stiffener 140, the first lead 131 is interposed between the stiffener 140 and the cap plate 110 and is more firmly position-fixed therebetween, and also, the coupling strength of the first lead 131 can be increased. Moreover, since the stiffener 140 extends in parallel to the first lead 131, the stiffener 140 reinforces rigidity of the first lead 131 and protects the first lead 131.

The stiffener 140 may have a Cantilever beam structure including a fixed end that is located at the first position P1 and a free end that is located at the second position P2. The stiffener 140 may be formed of a material which resists excess warp deformation to effectively compress the safety device body 135 and which has a rigidity that is sufficient to reinforce the rigidity of the first lead 131 and increase the coupling strength of the first lead 131.

The stiffener 140 may be formed of a thermally conductive material, and thus, may transmit heat of the electrode terminal 150 on the first position P1 to the safety device body 135 on the second position P2, thereby allowing the safety device body 135 to precisely detect the heating state of the secondary battery. Heat may be focused on the electrode terminal 150 because the electrode terminal 150 forms a current path for charge and discharge currents. Accordingly, due to the heat transmission of the stiffener 140 to the safety device body 135, an abnormal operation may be readily detected and a safety operation is performed. The stiffener 140 may be formed of a material that has mechanical rigidity and thermal conductivity, and examples of the material are invar or carbon steel. For example, the stiffener 140 may be formed of high-carbon steel. However, it will be appreciated that the present invention is not limited thereto.

A heat transmission member 120 is interposed between the safety device body 135 and the cap plate 110. The heat transmission member 120 may be interposed between the safety device body 135 and the cap plate 110 to thermally connect the safety device body 135 and the cap plate 110.

For example, the heat transmission member 120 contacts the safety device body 135 and the cap plate 110 between the safety device body 135 and the cap plate 110 to form a heat transmission path therebetween, and absorbs process allowance to enable the stiffener 140 to effectively compress the safety device body 135. That is, the heat transmission member 120 may prevent formation of a space between the stiffener 140 and the safety device body 135 due to a process allowance. For this purpose, the heat transmission member 120 may be formed of a flexible and thermally conductive material. Also, the heat transmission member 120 may include an adhesive material for firmly contacting the safety device body 135 and the cap plate 110. For example, the heat transmission member 120 may be formed of a composite material, such as a matrix sheet containing thermally conductive particles.

In another embodiment, the heat transmission member 120 may be formed by application of thermally conductive silicone. For example, thermally conductive silicone is applied at a position on which the safety device body 135 is to be mounted, and then, another heat transmission member having a sheet shape is deposited thereon.

An insulating coating or an insulating film (not shown) may be formed on a surface of the safety device body 135, and the insulating material may be integrated as an outer material with the safety device body 135.

The electrode terminal 150 protrudes from the cap plate 110 to effectively fix the first lead 131 and the stiffener 140 which are disposed on the cap plate 110 by compression. As shown in FIG. 3, the first position P1 of the electrode terminal 150 may be a position (offset distance L) eccentric with respect to a central portion (third position P3) of the cap plate 110. Because the convex electrode terminal 150 is formed at the position (first position P1) eccentric with respect to the central portion (third position P3) of the cap plate 110, an installation space on the cap plate 110 may be effectively used, and for example, electrical devices for controlling charge and discharge operations may be compactly installable.

As described above, because the electrode terminal 150 is formed on the offset first position P1 of the cap plate 110, a negative electrode terminal may be formable on the central portion (third position P3) of the cap plate 110 by using the safety device 130 that extends from the first position P1 to the central portion (third position P3). That is, the safety device 130 may extend from the first position P1 to the central portion (third position P3) of the cap plate 110 so that the second lead 132 may form a negative electrode terminal on the central portion (third position P3) of the cap plate 110.

The electrode terminal 150 allows the electrode assembly 10 and the safety device 130 disposed on opposite sides of the cap plate 110 to be electrically connected to each other. For example, the electrode terminal 150 may be electrically connected to the first lead 131 of the safety device 130 through the upper flange 150a and may be electrically connected to the electrode assembly 10 through a lower flange 150b.

The lower flange 150b of the electrode terminal 150 may have a wider area than the upper flange 150a and may provide a wide area for welding with the electrode assembly 10. That is, a width or radius W2 of the lower flange 150b may be wider than width or radius W1 of the upper flange 150a. Due to the wider area of the lower flange 150b than the upper flange 150a, there is no need to use a terminal plate for increasing a welding area between the electrode terminal 150 and the electrode assembly 10.

For example, because the lower flange 150b of the electrode terminal 150 has a relatively large area, the first electrode tap 11 may be directly welded to the electrode terminal 150. Thus, a separate member that is used to widen a welding area may not be needed. Also, due to the direct welding of the first electrode tap 11 to the electrode terminal 150 without the separate member, a charge and discharge path may be shortened and thus loss of resistance may be reduced.

The safety device 130 includes the safety device body 135 and the first and second leads 131 and 132 extending on opposite sides of the safety device body 135. The first lead 131 of the safety device 130 is fixed on the electrode terminal 150 by compression on the first position P1, and the second lead 132 of the safety device 130 may be exposed on the cap plate 110 on the third position P3 to form a negative electrode terminal.

For example, a charge and discharge current path may include the first electrode tap 11 of the electrode assembly 10, the electrode terminal 150, and the safety device 130, and the second lead 132 of the safety device 130 may form a negative electrode terminal.

The first and second leads 131 and 132 of the safety device 130 may be supported by and insulated from the first and second insulating portions 111 and 112 of the cap plate 110. The first and second insulating portions 111 and 112 may be formed on a portion of a conductive member 110a of the cap plate 110 which forms a skeleton of the cap plate 110 or may be formed passing through the conductive member 110a.

The first insulating portion 111 is formed on the first position P1 where the electrode terminal 150 is assembled, and supports the electrode terminal 150 and the first lead 131 while insulating them to prevent an electric short between the electrode terminal 150 and the first lead 131 and the conductive member 110a. That is, the first insulating portion 111 prevents a short between a positive electrode and a negative electrode, that is, between the first lead 131 that is electrically connected to the first electrode tap 11 of the electrode assembly 10 and the conductive member 110a that is connected to the second electrode tap 12 of the electrode assembly 10.

The first insulating portion 111 forms the through-hole 110' into which the electrode terminal 150 is inserted, and extends towards a surrounding of the through-hole 110' and support the electrode terminal 150 and the first lead 131 while insulating the electrode terminal 150 and the first lead 131. The first insulating portion 111 extends along the through-hole 110', and upper and lower ends 111a and 111b of the first insulating portion 111 arranged along the passing direction of the electrode terminal 150 extends in a surface direction of the cap plate 110. The upper end 111a of the first insulating portion 111 insulates the first lead 131 and the lower end 111b insulates the lower flange 150b of the electrode terminal 150. In this case, a portion of the first insulating portion 111 disposed in the through-hole 110' may be integrated with the upper and lower ends 111a and 111b.

Besides the insulting function of the first insulating portion 111 with respect to the electrode terminal 150, the first insulating portion 111 may have a gasket function for sealing the through-hole 110' through which the electrode terminal 150 passes. That is, the first insulating portion 111 seals the surrounding of the through-hole 110' while surrounding the electrode terminal 150 to prevent leakage of an electrolyte or permeation of external impurities through the through-hole 110'. For example, the electrode terminal 150 may be forcedly inserted into the through-hole 110' of the first insulating portion 111, and if the first insulating portion 111 is formed of a resin-based material, the first insulating portion 111 may firmly contact the circumference of the electrode terminal 150.

The second insulating portion 112 supports the second lead 132 of the safety device 130 while insulating the second lead 132. The second insulating portion 112 may be formed on the third position P3 of the cap plate 110, and for example, the central portion of the cap plate 110. The second insulating portion 112 may be formed on the surface of the conductive member 110a that forms a skeleton of the cap plate 110. The second lead 132 of the safety device 130 is disposed on the second insulating portion 112. The second lead 132 is electrically connected to the first electrode tap 11 of the electrode assembly 10 through the electrode terminal 150 and may form a negative electrode terminal. The first and second insulating portions 111 and 112 may be formed of the same material. For example, the first and second insulating portions 111 and 112 may be formed of a resin-based material.

The safety device 130 includes the safety device body 135 and the first and second leads 131 and 132 extending on opposite sides of the safety device body 135. The first and second leads 131 and 132 of the safety device 130 may be insulated by and supported on the first and second insulating portions 111 and 112 of the cap plate 110. That is, because the safety device body 135 is disposed on a portion of the conductive member 110a on which the first and second insulating portions 111 and 112 are not formed, the safety device body 135 may precisely sense an inner temperature of the secondary battery.

The cap plate 110 may be a plate formed by integrating two materials having different electrical characteristics, that is, a plate manufactured by integrally forming the conductive member 110a that has an electrical conductivity and the first and second insulating portions 111 and 112 that has an electrical insulating property.

The conductive member 110a may be connected to the second electrode tap 12 of the electrode assembly 10 to form a positive electrode terminal, and forms a skeleton of the cap plate 110. For example, the second electrode tab 12 of the electrode assembly 10 may be welded to a lower surface of the conductive member 110a and an exposed portion of the conductive member 110a may function as a positive electrode terminal.

The first and second insulating portions 111 and 112 may be formed on a surface of the conductive member 110a or may pass through the conductive member 110a. Thus, a short between a positive electrode and a negative electrode, that is, between the electrode terminal 150 connected to the first electrode tap 11 of the electrode assembly 10 and the conductive member 110a connected to the second electrode tab 12 of the electrode assembly may be prevented. Also, because the first and second insulating portions 111 and 112 conform to and are integrally formed with the conductive member 110a, assembling a separate insulating member on the cap plate 110 may not be needed. Also, because the conductive member 110a and the first and second insulating portions 111 and 112 form an integrated unit module, the whole assembly process for a secondary battery may be simplified.

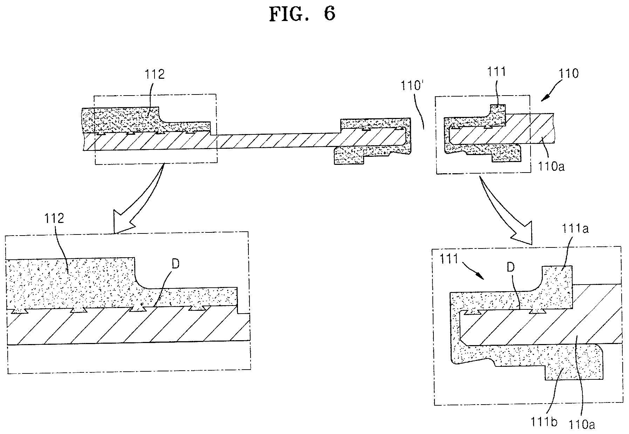

FIG. 6 is a cross-sectional view of a portion of the cap plate 110. Referring to FIG. 6, at interfaces of the conductive member 110a and the first and second insulating portions 111 and 112, a dove-tail shaped uneven pattern D may be formed to function as a stopper structure for preventing separation thereof, thereby allowing the first and second insulating portions 111 and 112 and the conductive member 110a to be firmly coupled to each other.

The cap plate 110 may be formed by insert molding. That is, the conductive member 110a is temporally fixed at a predetermined position inside a mold frame (not shown) and then, a molten molding resin (not shown) is loaded into the mold frame to form the cap plate 110 that includes the conductive member 110a and the first and second insulating portions 111 and 112 which are all integrated as one body. In this case, the first and second insulating portions 111 and 112 may be formed of the same material, for example, a resin-based material.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A secondary battery comprising:
an electrode assembly (10);
a case (20) housing the electrode assembly (10);
a cap plate (110) arranged to cover an opening of the case (20);
a safety device (130) disposed on the cap plate (110); and
a stiffener (140) arranged to hold the safety device (130) against the cap plate; and
**characterized in that**
an electrode terminal (150) is electrically connected to the electrode assembly (10);
the safety device comprises a body portion and a first lead (131) extending from the body portion and the stiffener is on each of the body portion and the first lead;
the electrode terminal extends through a through-hole (140') of the stiffener and a through-hole (130') of the first lead, in correspondence with the through-hole of the stiffener, and is provided with a first upper flange (150a) to fix the first lead and thus the safety device, as well as the stiffener, to the cap plate by pressure, the stiffener applying a compression force to press the body portion of the safety device against the cap plate.

2. A secondary battery according to claim 1, wherein the stiffener comprises thermally conductive material.

3. A secondary battery according to claim 2, wherein the stiffener comprises invar or carbon steel.

4. A secondary battery according to any preceding claim further comprising a heat transmission member interposed between and in thermal contact with the safety device and the cap plate.

5. A secondary battery according to claim 4 wherein the heat transmission member comprises a flexible and thermally conductive material.

6. A secondary battery according to claim 5 wherein the heat transmission member comprises silicone.

7. A secondary battery according to any one of claims 1 to 6, wherein the stiffener extends parallel to the first lead to overlie at least part of the first lead.

8. A secondary battery according to claim 7, wherein the stiffener has a cantilever beam structure including a fixed end located at a first location corresponding to the first lead and a free end located at a second position corresponding to the body portion of the safety device.

9. A secondary battery according to any preceding claim further comprising an electrode tap extending from the electrode assembly wherein the electrode terminal is directly connected to the electrode tap.

10. A secondary battery according to claim 9 wherein the electrode terminal is provided with a second flange for connection to the electrode tap, the second flange being wider than the first flange.

## Patentansprüche

1. Sekundärbatterie, umfassend:
eine Elektrodenbaugruppe (10);
ein Gehäuse (20), das die Elektrodenbaugruppe (10) beherbergt;
eine Deckplatte (110), die so angeordnet ist, dass sie eine Öffnung des Gehäuses (20) abdeckt;
eine Sicherheitsvorrichtung (130), die auf der Deckplatte (110) angeordnet ist; und
ein Aussteifungselement (140), das so angeordnet ist, dass es die Sicherheitsvorrichtung (130) gegen die Deckplatte hält; und
**dadurch gekennzeichnet, dass**
ein Elektrodenanschluss (150) elektrisch an die Elektrodenbaugruppe (10) angeschlossen ist;
die Sicherheitsvorrichtung einen Körperabschnitt und einen ersten Anschluss (131), der sich von dem Körperabschnitt aus erstreckt, umfasst und das Aussteifungselement sich sowohl auf dem Körperabschnitt als auch auf dem ersten Anschluss befindet;
der Elektrodenanschluss sich durch ein Durchgangsloch (140') des Aussteifungselements und ein Durchgangsloch (130') des ersten Anschlusses, das dem Durchgangsloch des Aussteifungselements entspricht, erstreckt und mit einem ersten oberen Flansch (150a) versehen ist, um den ersten Anschluss und somit die Sicherheitsvorrichtung, sowie das Aussteifungselement, mittels Druck an der Deckplatte zu befestigen, wobei das Aussteifungselement eine Druckkraft ausübt, um den Körperabschnitt der Sicherheitsvorrichtung gegen die Deckplatte zu pressen.

2. Sekundärbatterie nach Anspruch 1, wobei das Aussteifungselement wärmeleitfähiges Material umfasst.

3. Sekundärbatterie nach Anspruch 2, wobei das Aussteifungselement Invar- oder Kohlenstoffstahl umfasst.

4. Sekundärbatterie nach einem der vorangehenden Ansprüche, ferner umfassend ein Wärmeübergangsglied, das zwischen der Sicherheitsvorrichtung und der Deckplatte eingefügt ist und in Wärmekontakt mit diesen steht.

5. Sekundärbatterie nach Anspruch 4, wobei das Wärmeübergangsglied ein flexibles und wärmeleitfähiges Material umfasst.

6. Sekundärbatterie nach Anspruch 5, wobei das Wärmeübergangsglied Silikon umfasst.

7. Sekundärbatterie nach einem der Ansprüche 1 bis 6, wobei das Aussteifungselement sich parallel zu dem ersten Anschluss erstreckt, um über zumindest einem Teil des ersten Anschlusses zu liegen.

8. Sekundärbatterie nach Anspruch 7, wobei das Aussteifungselement eine Freiträgerstruktur aufweist, die einschließt: ein befestigtes Ende, das sich an einer ersten Stelle befindet, die dem ersten Anschluss entspricht, und ein freies Ende, das sich an einer zweiten Stelle befindet, die dem Körperabschnitt der Sicherheitsvorrichtung entspricht.

9. Sekundärbatterie nach einem der vorangehenden Ansprüche, ferner umfassend eine Elektrodenzunge, die sich von der Elektrodenbaugruppe aus erstreckt, wobei der Elektrodenanschluss direkt an die Elektrodenzunge angeschlossen ist.

10. Sekundärbatterie nach Anspruch 9, wobei der Elektrodenanschluss mit einem zweiten Flansch zum Anschluss an die Elektrodenzunge versehen ist, wobei der zweite Flansch breiter als der erste Flansch ist.

## Revendications

1. Batterie secondaire comprenant :
un ensemble d'électrodes (10) ;
un boîtier (20) logeant l'ensemble d'électrodes (10) ;
une plaque formant coiffe (110) agencée pour recouvrir une ouverture du boîtier (20) ;
un dispositif de sécurité (130) disposé sur la plaque formant coiffe (110) ; et
un raidisseur (140) agencé pour maintenir le dispositif de sécurité (130) contre la plaque formant coiffe ; et
**caractérisée en ce que**
une borne d'électrode (150) est reliée électriquement à l'ensemble d'électrodes (10) ;
le dispositif de sécurité comprend une partie de corps et un premier conducteur (131) s'étendant à partir de la partie de corps et le raidisseur est sur chacun de la partie de corps et du premier conducteur ;
la borne d'électrode s'étend à travers un trou traversant (140') du raidisseur et un trou traversant (130') du premier conducteur, en correspondance avec le trou traversant du raidisseur, et est prévue avec une première bride supérieure (150a) afin de fixer le premier conducteur et donc le dispositif de sécurité, ainsi que le raidisseur, sur la plaque formant coiffe par pression, le raidisseur appliquant une force de compression pour comprimer la partie de corps du dispositif de sécurité contre la plaque formant coiffe.

2. Batterie rechargeable selon la revendication 1, dans laquelle le raidisseur comprend un matériau thermiquement conducteur.

3. Batterie rechargeable selon la revendication 2, dans laquelle le raidisseur comprend de l'invar ou un acier au carbone.

4. Batterie rechargeable selon l'une quelconque des revendications précédentes, comprenant en outre un élément de transmission de chaleur intercalé entre et en contact thermique avec le dispositif de sécurité et la plaque formant coiffe.

5. Batterie rechargeable selon la revendication 4, dans laquelle l'élément de transmission de chaleur comprend un matériau flexible et thermiquement conducteur.

6. Batterie rechargeable selon la revendication 5, dans laquelle l'élément de transmission de chaleur comprend de la silicone.

7. Batterie rechargeable selon l'une quelconque des revendications 1 à 6, dans laquelle le raidisseur s'étend parallèlement au premier conducteur pour recouvrir au moins une partie du premier conducteur.

8. Batterie rechargeable selon la revendication 7, dans laquelle le raidisseur a une structure de poutre en porte-à-faux comprenant une extrémité fixe positionnée au niveau d'un premier emplacement correspondant au premier fil et une extrémité libre positionnée au niveau d'une seconde position correspondant à la partie de corps du dispositif de sécurité.

9. Batterie rechargeable selon l'une quelconque des revendications précédentes, comprenant en outre un branchement d'électrode s'étendant à partir de l'ensemble d'électrodes, dans laquelle la borne d'électrode est directement reliée au branchement d'électrode.

10. Batterie rechargeable selon la revendication 9, dans laquelle la borne d'électrode est prévue avec une seconde bride pour le raccordement au branchement d'électrode, la seconde bride étant plus large que la première bride.
